# EUROPEAN PATENT APPLICATION

(11) **EP 4 491 761 A1**
(43) Date of publication of application: **15.01.2025**
(21) Application number: 23787817.8
(22) Date of filing: 14.04.2023
(51) Int. Cl.: C23C 22/68

(54) **COATED STEEL SHEET FOR HOT STAMPING AND AQUEOUS SURFACE TREATMENT LIQUID APPLICABLE TO SAME**

(30) Priority: 15.04.2022 CN 202210395177
(71) Applicant: BAOSHAN IRON & STEEL CO., LTD., Shanghai 201900 (CN)
(72) Inventor: FANG, Wenqi, Shanghai 201900 (CN); DAI, Yigang, Shanghai 201900 (CN); MA, Yuan, Shanghai 201900 (CN)
(74) Representative: Maiwald GmbH
(86) International application number: PCT/CN2023/088298
(87) International publication number: WO 2023/198175

(57) **Abstract**

The present disclosure relates to a coated steel sheet for hot stamping and an aqueous surface treatment liquid applicable to the same. A composite coating layer is formed on the surface of a coated steel sheet by using an improved aqueous surface treatment liquid, such that the obtained coated steel sheet for hot stamping has good high-temperature lubricity during hot stamping process, the processability of the coated steel sheet for hot stamping is improved, the wear of the surface of a hot stamping mold is reduced, the frequency of mold repair decreased, and the production efficiency is improved.

## Description

### TECHNICAL FIELD

The invention belongs to the field of metal surface treatment, and in particular relates to a coated steel sheet for hot stamping and an aqueous surface treatment liquid applicable to the same.

### BACKGROUND ART

Hot stamped ultra-high-strength steel can reduce the weight of the automobile while providing collision safety performance of a vehicle body. It is one of the effective ways to achieve energy conservation and emission reduction of the automobiles. Therefore, hot stamped parts and hot stamping processes are increasingly used in the automotive industry and are currently widely used in the manufacture of automotive parts such as A-pillar, B-pillar, door ring, center channel and bumper.

Among plain-carbon steels, only steel grades such as boron-based alloy steel can achieve a complete transformation to martensitic microstructure during the cooling process following hot stamping forming. Among these, 22MnB5 is the most commonly used hot-stamped steel. Before hot forming, this material has a ferrite-pearlite microstructure with a yield strength of about 550 MPa. After complete martensitic transformation, the yield strength can reach about 1500 MPa. In order to achieve a complete transformation to martensitic microstructure, the material must undergo full austenitization at high temperatures, followed by hot forming and quenching to complete the phase transformation process. The austenitizing treatment is carried out in a heating furnace, where the sheet is heated to a temperature above Ac3 (typically 900-950 °C) and held for 3 to 10 minutes, depending on the thickness of the sheet. After complete austenitzation, the material is transferred from the heating furnace to a hot-forming press. This process is carried out in air, and the cooling rate must exceed 27 K/s before reaching 400 °C to ensure a diffusionless phase transformation to martensite phase and finally achieve the corresponding mechanical strength.

However, when applying the hot stamping method to a boron-based alloy steel sheets, the surface of the steel sheet will be oxidized, resulting in decarburization and the formation of scale. Decarburization reduces the surface strength of the steel sheet, while the scale increases friction between the steel sheet and the mold and reduces the service life of the mold. Additionally, the scale adhered to the mold surface needs to be removed during production, which decreases production efficiency. Hot stamped parts require shot blasting treatment as a post-treatment process. For parts with reduced sheet thickness, shot blasting can easily cause residual stress on the surface of the parts, leading to deformation. In addition, for parts that require corrosion resistance, post-processing steps such as surface cleaning, surface pretreatment and the application of rust-prevention coatings are necessary, which decreases production efficiency.

In order to prevent oxidation and decarburization on the surface of steel sheets and to improve the high temperature resistance and corrosion resistance of hot stamped steel sheets, high-temperature oxidation prevention technologies applicable to hot stamped steel sheets have been developed. These mainly include hot-dipping aluminizing with aluminum-silicon (Al-10wt% Si), pure zinc (GI), alloyed zinc-iron (GA) and electroplated zinc-nickel (Zn-11wt%Ni) coatings as well as multi-functional protective coatings, and the like. However, the heating temperature (700-1000°C) during hot pressing process is higher than the melting point and boiling point of Zn metal and alloys, leading to embrittlement induced by liquid metal (Zn or Zn-Fe) (liquid-metal induced embrittlement), which limits the use of GI and GA coatings. Although Zn-Ni coatings have certain application prospects, they are expensive and have low productivity. Anti-oxidation oils, protective coatings, etc. can prevent high-temperature oxidation of the steel sheet substrate to a certain extent, but they suffer from poor surface adhesion and uniformity when exposed to high temperatures, leading to issues such as surface coating powdering and peeling, lack of corrosion resistance, and a narrow welding window.

Aluminum silicon (AlSi) coating has characteristics such as no oxide scale detachment during heating, no need for sandblasting after stamping, high forming precision, no requirement for nitrogen protection, and a large welding window after heating. Therefore, it is currently widely used in hot stamping processes. In addition, the AlSi coating also has a certain rust prevention effect, which improves corrosion resistance. However, during the heating process of steel sheets with an AlSi coating on the surface, the element Fe from the steel sheet diffuses into the AlSi coating and generate a variety of Al-Fe-Si and Al-Fe alloy layers in the bulk phase and on the surface of the AlSi coating. Among these, the Al-Fe alloy layer has extremely high hardness, which can lead to surface damage and galling issues on both the processed parts and the mold due to contact and friction between the AlSi-coated steel sheet and the mold during the hot stamping process.

Due to the high surface hardness of the Al-Fe alloy layer, it is difficult to achieve relative sliding at high temperatures, resulting in poor lubricity. During hot stamping process, it is prone to cracking, and at locations with large deformation, defects such as cracks perpendicular to the interface between the coating and the iron substrate may appear, and the surface may powdered, leading to reduced formability of the steel sheet. In addition, the peeled-off Al-Fe metallic compound adhere to the mold, which further aggravates the friction between the coated steel sheet and the mold, thereby reducing the quality of the final parts and causing wear on the mold surface. Consequently, more frequent mold repair is required to remove the Al-Fe metallic compound adhered to the mold surface, resulting in reduced production efficiency and increased production costs for finished parts.

Therefore, in order to prevent damage to the surfaces of parts and molds during the hot stamping process of steel sheets coated with an AlSi layer, while also reducing the adhesion of Al-Fe metallic compound on the mold surface, Publication No. CN102066615A provides a solution of forming a surface coating layer containing ZnO having wurtzite crystal structure on an Al-plating layer, so that the Al-plating layer has lubricity, can prevent the plating thickness from becoming uneven during heating, and improve formability of hot stamped steel sheets. However, in this technology, ZnO particles need to be attached to the surface of the Al-plating layer using adhesives such as organic resins and silane coupling agents. These adhesives will be oxidized and decomposed at a heating temperature of 700-1000°C, causing a large amount of ZnO to peel off from the surface of the Al-plating layer. During this process, the peeled ZnO particles may diffuse and contaminate the heating furnace channel during the heating process, or adhere to the mold surface during the hot stamping process, thereby causing mold contamination. In addition, the residual ZnO particles on the surface of the Al-plating layer may deteriorate the weldability of the formed parts.

Publication No. CN104093880A discloses a solution of containing at least one Zn compound selected from the group consisting of Zn hydroxide, Zn phosphate, and a Zn organic acid as a surface coating layer on an Al plating layer. This technology also requires at least one of organic resin, silane coupling agent and silica sol as the adhesive. However, Zn hydroxide, Zn phosphate and Zn organic acid are all oxidized into zinc oxide (ZnO) at a heating temperature of 700-1000°C, and the above-mentioned adhesives may also oxidize and decompose. Therefore, similar to the above-mentioned technology of CN102066615A, this technology also fails to address the problem of poor adhesion of Zn-containing oxide particles on the Al-plating layer surface after hot stamping, and the problem of peeled-off Zn oxide particles contaminating the furnace channel and the mold.

Publication No. CN104220641A discloses that a compound including one or more transition metal elements is added in a surface coating layer containing ZnO as an additive for improving lubricity. However, similar to the two above-mentioned patents, this technology also requires an organic adhesive to assist in the film formation and adhesion of ZnO and transition metallic compounds. After the organic adhesive is decomposed under heating conditions of 700-1000°C, it is also impossible to maintain the adhesion of ZnO and transition metallic compounds on the Al-plating layer surface of the steel sheet.

Publication No. CN105121691A discloses that a steel sheet can improve heating performances in hot pressing by comprising an Al plating layer containing 0.02 to 2 mass % of one or more elements selected from Mg, Ca, Sr, Li, Na, and K, and a surface coating layer laminated on the Al plating layer and containing ZnO. However, changing the composition of the Al-plating layer also fails to solve the problem that after the ZnO surface coating layer containing an organic adhesive is heated at 700-1000°C, ZnO cannot form effective adhesion on the surface of the Al-plating layer due to the decomposition of the adhesive.

Publication No. CN107636200A provides a surface treatment solution for a plated steel sheet to be hot-pressed comprising a ZnO aqueous dispersion and a water dispersible organic resin, wherein the water dispersible organic resin acts as a film-forming adhesive after the surface treatment solution is applied to the surface of the plated steel sheet and dried to form a film. It can be seen from the processing procedures of the hot-pressed steel sheet that: under heating conditions of 700-1000°C, after the organic resin is decomposed due to high temperature, the ZnO particles, similar to the aforementioned technologies, cannot form effective adhesion on the surface of the plated layer.

In summary, the technology, in which wurtzite-type ZnO particle and an aqueous resin are applied on the surface of Al- or AlSi-plating layer to improve thermal lubricity and chemical conversion treatability, has a certain effect. However, as for the aqueous resin, thermal decomposition occurs under high-temperature heat treatment conditions, so that a large number of ZnO particles cannot form effective adhesion on the surface of the plating layer. As a result, the coating often requires a higher film weight, such as more than 3 g/m² of wurtzite-type ZnO compound, to exhibit obvious thermal lubricity. Thermal lubricity, the advantages in chemical conversion treatability after hot forming, and the corresponding improvement in coating corrosion resistance shown in the actual situation are also unstable. In addition, the use of other adhesives such as silane coupling agent cannot solve the problem of reduced the adhesion of the film layer due to decomposition of the adhesive after high-temperature heat treatment. It also introduces thermal decomposition products such as silica, which will damage welding performance, adhesive performance and chemical conversion treatability during coating, and affect the adhesion and corrosion resistance of the paint film after coating.

### SUMMARY OF THE INVENTION

In view of the above-mentioned defects existing in the prior art, an object of the present disclosure is to provide a coated steel sheet for hot stamping and an aqueous surface treatment liquid applicable to the same.

In the present disclosure, by designing the composition of the aqueous surface treatment liquid and applying it on the surface of the coated steel sheet, the coated steel sheet for hot stamping has good high-temperature lubricity during hot stamping process, the processability of the coated steel sheet for hot stamping is improved, the wear of the surface of a hot stamping mold is reduced, the frequency of mold repair is decreased, and the production efficiency is improved. In addition, after the coated steel sheet for hot stamping is hot stamped, good weldability and adhesiveness can be achieved, chemical conversion treatability is good, and corrosion resistance after coating is improved.

Specifically, the present disclosure adopts the following technical solutions:
According to the first aspect of the present disclosure, provided is a coated steel sheet for hot stamping comprising a coated steel sheet and a composite coating layer formed by applying an aqueous surface treatment liquid on the coated steel sheet;
wherein the coated steel sheet includes a substrate and an Al- or AlSi-containing coating disposed on one side or both sides of the substrate;
wherein the composite coating layer contains an aqueous anionic polymer resin A, a tungsten-containing compound B, a zinc-containing compound C, a boron-containing compound D, a water-soluble thickener E and an aqueous surface improvement aid F.

Preferably, the composite coating layer has a dry film weight of 1-5 g/m².

According to the second aspect of the present disclosure, provided is an aqueous surface treatment liquid for forming the above-mentioned composite coating layer on the coated steel sheet, wherein the aqueous surface treatment liquid is formed by dispersing a solid phase substance in water;
wherein the solid phase substance comprises the following components in parts by mass:
an aqueous anionic polymer resin A: 15-65 parts;
a tungsten-containing compound B: 10-40 parts, in terms of parts by mass of tungsten element;
a zinc-containing compound C: 3-15 parts, in terms of parts by mass of zinc element;
a boron-containing compound D: 0.004-0.03 parts, in terms of parts by mass of boron element;
a water-soluble thickener E: 0.01-0.5 parts;
an aqueous surface improvement aid F: 0.5-2 parts.

Preferably, the aqueous anionic polymer resin A is one or more selected from an aqueous acrylic resin, an aqueous epoxy resin, an aqueous polyester resin and an aqueous alkyd resin; and/or
the tungsten-containing compound B is one or more selected from a tungsten oxide, a tungstate or a tungsten metal salt; and/or
the zinc-containing compound C is selected from a zinc oxide, a zinc salt or an organic zinc compound; and/or
the boron-containing compound D is selected from a boron oxide, a borate or an organic boron compound; and/or
the water-soluble thickener E is one or more selected from a water-soluble hydroxymethyl cellulose, a water-dispersible alkali-swellable polyacrylic acid emulsion, a water-dispersible nonionic polyurethane associative thickening resin; and/or
the aqueous surface improvement aid F is one or two selected from water-dispersible modified polydimethylsiloxane and water-dispersible polyether modified silicone; and/or wherein the aqueous anionic polymer resin A is 20-50 parts by mass; and/or
the tungsten-containing compound B is 15-35 parts by mass, in terms of parts by mass of tungsten element.

Preferably, the aqueous anionic polymer resin A has a number average molecular weight of greater than 8,000, and the mass fraction of harmful substances generated from the combustion of the aqueous anionic polymer resin A is less than 1 wt% of the total solid content of the aqueous anionic polymer resin A; and/or
when the tungsten-containing compound B is a water-insoluble tungsten compound, the tungsten-containing compound B has a particle size of 5-1,000 nm; and/or
when the zinc-containing compound C is a water-insoluble zinc compound, the zinc-containing compound C has a particle size of 5-1000 nm; and/or
the mass ratio of the Zn element in the zinc-containing compound C to the boron element in the boron-containing compound D is 150:1 to 750:1, preferably 250:1 to 670:1; and/or
the water-soluble thickener E has a number average molecular weight of 50,000-100,000.

Preferably, the tungsten-containing compound B has a particle size of 20-500 nm; and/or the zinc-containing compound C has a particle size of 20-500 nm.

According to the third aspect of the present disclosure, provided is a manufacturing method for the above-mentioned coated steel sheet for hot stamping, including the following steps: applying the aqueous surface treatment liquid on a surface-cleaned Al- or AlSi-coated steel sheet, then curing the aqueous surface treatment liquid at 80-180°C to form a composite coating layer on the Al- or AlSi-coated steel sheet, thereby obtaining the coated steel sheet for hot stamping.

According to the fourth aspect of the present disclosure, provided is a hot stamping method for the above-mentioned coated steel sheet for hot stamping, including the steps of punching, heating and stamp forming the coated steel sheet for hot stamping.

Preferably, during the heating process, the punched coated steel sheet for hot stamping is heated from 50°C to an ultimate sheet temperature and held for 30-60 s; then the heated coated steel sheet for hot stamping is transferred to a mold having a cooling effect for stamp forming.

Preferably, during the heating process, an average heating rate is 3-12°C/s, and the ultimate sheet temperature is 850-980°C; and/or
the stamp forming process is carried out in air, with a cooling rate being ≥27°C/s before the temperature of the coated steel sheet for hot stamping is decreased to 400°C. The method of cooling the steel sheet is as follows: the mold for stamp forming has a water-cooling function. During hot stamp forming, the cooling rate is controlled by adjusting the flow rate of cooling water and the pressure holding time in the mold. Alternatively, forced cooling can be performed by water mist spraying, provided that the cooling rate meets the requirements. There is no special restriction on the upper limit of the cooling rate, which can be selected according to actual needs. Considering the process cost, it is preferred to set the upper limit of the cooling rate to 50°C/s.

According to the fifth aspect of the present disclosure, provided is a hot stamped and formed coated steel sheet obtained by the above-mentioned hot stamping method, wherein the hot stamped and formed coated steel sheet has a yield strength of ≥950 MPa, a tensile strength of ≥1300 MPa, an elongation after fracture A₅₀ₘₘ of ≥5%, a hardness HV10 of ≥400 or a hardness HRC of ≥40, and a cold bending angle VDA of ≥45°. The coated steel sheet for hot stamping provided by the present disclosure and the aqueous surface treatment liquid applicable to the same have the following beneficial effects:
1. In the present disclosure, by designing the composition of the aqueous surface treatment liquid and applying it on the surface of the coated steel sheet, the coated steel sheet for hot stamping has good high-temperature lubricity during hot stamping process, the processability of the coated steel sheet for hot stamping is improved, the wear of the surface of a hot stamping mold is reduced, the frequency of mold repair is decreased, and the production efficiency is improved. In addition, after the coated steel sheet for hot stamping is hot stamped, good weldability and adhesiveness can be achieved, chemical conversion treatability is good, and corrosion resistance after coating is improved.
2. The present disclosure provides an Al- or AlSi-coated steel sheet for hot forming and an aqueous surface treatment liquid. The aqueous surface treatment liquid and the products treated therewith do not contain harmful elements such as chromium, and have little impact on the environment.
3. The coated steel sheet for hot stamping of the present disclosure is coated with a composite coating layer containing tungsten (W), zinc (Zn) and organic resin on its surface. The composite coating layer has an anti-corrosion effect equivalent to rust prevention oil and can withstand long-term transportation or storage without the protection of rust prevention oil. In addition, the coated steel sheet for hot stamping has stable thermal lubricity during hot stamping process, and has good chemical conversion treatability, corrosion resistance after coating, and spot welding performance after hot stamping.
4. The aqueous surface treatment liquid of the present disclosure is easy to apply and has stable performances.
5. The manufacturing method and the hot stamping method for the coated steel sheet for hot stamping of the present disclosure have short process flows and are easy to implement.

### BRIEF DESCRIPTION OF THE DRAWINGS

The other features, objects, and advantages of the present disclosure will become more apparent by reading the following detailed description of non-limiting embodiments, with reference to the accompanying drawings as below:
Figure 1 is a schematic diagram of a structure of the coated steel sheet for hot stamping of the present disclosure;
Figure 2 is a schematic diagram of a testing machine for testing the high temperature friction coefficient of the sheet strip in an embodiment of the present disclosure;
Figure 3 is a schematic cross-sectional view in the longitudinal direction of a sample sheet of an adhesive component used for testing adhesiveness.

### REFERENCE SIGNS LIST

- 10: Substrate
- 11: Al- or AlSi-containing coating
- 12: Composite coating layer
- 20: Test sample sheet
- 21: Motor
- 22: Coupling
- 23: Transmission shaft
- 24: Recorder
- 25: Force sensor
- 26: Upper mold
- 27: Cooling water channel
- 28: Lower mold
- 29: Heating furnace

### DETAILED DESCRIPTION OF THE EMBODIMENTS

In order to better understand the above technical solutions of the present disclosure, the present disclosure will be further described in combination with examples below.

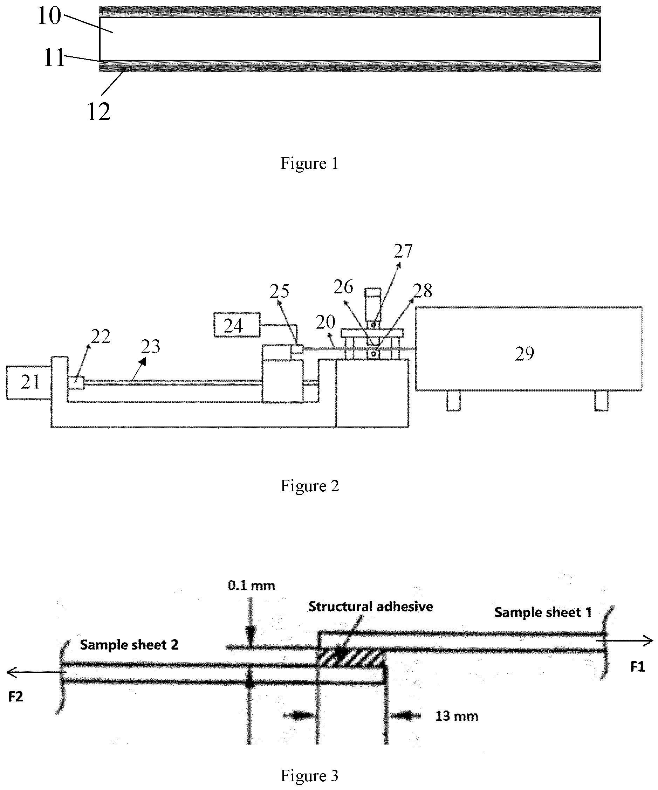

As shown in FIG1, the present disclosure provides a coated steel sheet for hot stamping, comprising a coated steel sheet and a composite coating layer 12 formed by applying an aqueous surface treatment liquid on the coated steel sheet; wherein the coated steel sheet includes a substrate 10 and an Al- or AlSi-containing coating 11 disposed on one side or both sides of the substrate 10. The composite coating layer 12 contains an aqueous anionic polymer resin A, a tungsten-containing compound B, a zinc-containing compound C, a boron-containing compound D, a water-soluble thickener E and an aqueous surface improvement aid F.

The composite film layer 12 has a dry film weight of 1-5 g/m². That is, the thickness of the composite coating layer 12 on each side is controlled between 1 and 5 g/m². The reason is as follows. When the film weight of the composite coating layer is less than 1 g/m², the low amount of coating leads to a reduction in the processing lubricating function of the steel sheet during hot stamp forming. When the film weight of the composite coating layer 12 exceeds 5 g/m², on the one hand, the surface treatment cost per unit area of the steel sheet will increase; on the other hand, an excessively thick coating layer may cause the organic components in the composite coating layer 12 to fail to fully decompose during the heat treatment process, and some inorganic substances in the coating layer may not form good adhesion with the surface of the Al or AlSi-coated steel sheet, and the residues from the combustion of the inorganic substances could contaminate the furnace and the mold.

The parts by mass of each solid component in the composite coating layer 12 are as follows: the aqueous anionic polymer resin A: 15-65 parts; the tungsten-containing compound B: 10-40 parts, in terms of parts by mass of tungsten element; the zinc-containing compound C: 3-15 parts, in terms of parts by mass of zinc element; the boron-containing compound D: 0.004-0.03 parts, in terms of parts by mass of boron element; the water-soluble thickener E: 0.01-0.5 parts; the aqueous surface improvement aid F: 0.5-2 parts.

The aqueous anionic polymer resin A is one or more composite resins selected from an aqueous acrylic resin, an aqueous epoxy resin, an aqueous polyester resin and an aqueous alkyd resin. The aqueous anionic polymer resin A should have a number average molecular weight of more than 8,000. The mass fraction of harmful nitrogen, sulfur and chlorine elements that may be generated from the combustion of the aqueous anionic polymer resin A should be less than 1 wt% of the total solid content of the aqueous anionic polymer resin A. The aqueous anionic polymer resin A can be dispersed in water in the form of an aqueous solution, an aqueous dispersion or an emulsion type.

The composite coating layer 12 contains 15-65 parts by mass of the aqueous anionic polymer resin A. When the parts by mass of the aqueous anionic polymer resin A is less than 15 parts, the adhesion of the composite coating layer formed by the aqueous anionic polymer resin A on the surface of the Al- or AlSi-coated steel sheet for hot stamping may decrease. When the parts by mass of the aqueous anionic polymer resin A exceeds 65 parts, the relative proportion of the tungsten-containing compound B that mainly plays a high-temperature lubricating role in the composite film layer on the surface of the Al-plated or AlSi-plated steel plate for hot stamping will decrease, and sufficient lubrication may not be provided during the hot stamping process. More preferably, the composite coating layer 12 contains 20-50 parts by mass of the aqueous anionic polymer resin A.

The tungsten-containing compound B has a high-temperature lubrication function, and the parts by mass thereof in terms of a tungsten element is 10-40 parts. The reason is as follows. When the parts by mass of the tungsten-containing compound B having high-temperature lubrication function in terms of a tungsten element is less than 10 parts, it cannot play the role of high-temperature lubrication. When the parts by mass of the tungsten-containing compound B having high-temperature lubrication function in terms of a tungsten element is greater than 40 parts, the performance of the composite coating layer will deteriorate, which may affect the properties such as adhesion, water resistance, and corrosion resistance of the coating and the Al- or AlSi-coated steel sheet, and increase the production cost. Preferably, the parts by mass of the tungsten-containing compound B having high-temperature lubrication function in terms of a tungsten element is 15-35 parts.

Preferably, the tungsten-containing compound B having high-temperature lubrication function is formed during hot stamping process, and contains compounds having lubrication function such as tungsten oxide and tungstate. When the tungsten-containing compound B is coated on an Al or AlSi-based coated steel sheet, it has a lubricating effect at the interface between the steel sheet and the mold. The source of the tungsten-containing compound B can be tungsten oxides, such as tungsten trioxide (WO₃), tungsten dioxide (WO₂) or blue tungsten oxide (WO_{2.72}, WO_{2.90}, W₂₀O₅₈ and (NH₄)ₓ·WO₃); or tungstate compounds, such as sodium tungstate (Na₂WO₄), potassium tungstate (K₂WO₄), lithium tungstate (Li₂WO₄), magnesium tungstate (MgWO₄), calcium tungstate (CaWO₄), cobalt tungstate (CoW0₄), cadmium tungstate (CdWO₄), ferrous tungstate (FeWO₄), ammonium tungstate [(NH₄)₆W₇O₂₄] and zinc tungstate (5ZnO·12WO₃); or tungsten metal salts, such as tungsten chloride [tungsten hexachloride (WCl₆), tungsten pentachloride (WCl₅), tungsten tetrachloride (WCl₄), tungsten dichloride (WCl₂)]; or other types of tungsten-containing compounds, such as nano tungsten carbide (WC), tungsten disulfide (WS₂) and tungsten diselenide (WSe₂). The tungsten-containing compound B having high-temperature lubrication function may contain one or more tungsten oxides, tungstates, tungsten salts or other tungsten-containing compounds. These may be the same type of tungsten oxide, tungstate, tungsten salt or other tungsten-containing compound, or they may be different types of tungsten oxides, tungstates, tungsten salts, other tungsten-containing compounds, or mixtures thereof.

The tungsten-containing compound B having high-temperature lubrication function undergoes thermal decomposition and thermochemical reaction during the hot stamping and heating processes (with limiting temperature reaching 850°C-980°C). Therefore, from the perspectives of environmental protection and operational safety, tungsten-containing compounds that decompose to produce harmful substances at high temperatures should be avoided. Preferably, the tungsten-containing compound B is at least one selected from tungsten trioxide (WO₃), sodium tungstate (Na₂WO₄), potassium tungstate (K₂WO₄), magnesium tungstate (MgWO₄), ammonium tungstate [(NH₄)₆W₇O₂₄] and nanotungsten carbide (WC).

The tungsten-containing compound B having high-temperature lubrication function can be uniformly dispersed in the composite coating layer 12 in the form of powder or solute. Preferably, in order to improve the dispersibility of the tungsten-containing compound B having high-temperature lubrication function, the aqueous anionic polymer resin A having good compatibility with it can be selected to match it. For tungsten-containing compound B in powder form, a dispersing agent can be added in an amount of 0.01 to 0.5 parts by mass to improve the dispersibility of the tungsten-containing compound B in the aqueous anionic polymer resin A matrix, so that the tungsten-containing compound B having high-temperature lubrication function maintains basic stability in physical properties at 200°C or less, and does not agglomerate or segregate in the composite coating layer 12.

The tungsten-containing compound B having high-temperature lubrication function, such as tungsten oxide, tungstate, tungsten salt or other tungsten-containing compound that is insoluble in water, has a particle size in powder form of 5-1000 nm, preferably 20-500 nm.

The tungsten-containing compound B having high-temperature lubrication function is a suitable high-temperature lubricating aid in the hot stamping process. This is because tungsten-containing compound B, such as tungsten oxide, tungstate, tungsten salt or other tungsten-containing compound, can partially or fully decompose (or converted) into a solid lubricant tungsten oxide (WOx) having high ionic potential at high temperatures. For example, tungstate can undergo a substitution reaction with Al₂O₃ on the surface of Al or AlSi coating at high temperatures: MeₓWO₄ + Al₂O₃ → 2MexAlO₂ + WO₃, to form WO₃ having high-temperature lubrication function. The formed tungsten oxide exhibits good adhesion to Al or AlSi coating at high temperatures. In addition, zinc tungstate (5ZnO·12WO₃), nano tungsten carbide (WC), tungsten disulfide (WS₂), tungsten diselenide (WSe₂) and the like also have good high-temperature oxidation resistance and high-temperature lubrication properties themselves.

The parts by mass of the zinc-containing compound C in terms of a zinc element is 3-15 parts. The reason is as follows. When the parts by mass of the zinc-containing compound C in terms of a zinc element is less than 3 parts, it cannot effectively improve the chemical conversion treatability of the parts after hot forming and the corrosion resistance after coating. When the parts by mass of the zinc-containing compound C in terms of a zinc element is greater than 15 parts, it may lead to reduced adhesion between the surface composite coating and the Al- or AlSi-coated steel sheet, and the zinc-containing conversion layer formed after hot forming may not adhere well to the surface of the coated steel sheet. When the zinc-containing compound C is a zinc-containing compound that is insoluble in water, in order to ensure its uniform dispersion in the surface composite coating layer, its particle size in powder form should be 5-1,000 nm, preferably 20-500 nm. The source of the zinc-containing compound C can be zinc oxides, such as zinc oxide (ZnO); zinc salts, such as zinc nitrate (ZnNO₃) and zinc chloride (ZnCl₂); or organic zinc compounds, such as zinc acetate (Zn(Ac)₂) and zinc stearate (C₃₆H₇₀O₄Zn).

The parts by mass of the boron-containing compound D in terms of a boron element is 0.004-0.03 parts. The reason for this is as follows. When the parts by mass of the boron compound D in terms of a boron element is less than 0.004, it cannot effectively improve the adhesion of the coating to the surface of the Al or AlSi-coated steel sheet after hot forming. When the parts by mass of the boron compound D in terms of a boron element is greater than 0.03, the reactivity of the composite coating layer with chemical treatment agents and the coating performance after hot forming will deteriorate. The source of the boron-containing compound D can be boron oxides, such as boron oxide (B₂O₃); borates, such as magnesium borate (MgHBO₃), sodium tetraborate (Na₂B₄O₇) and sodium borohydride (NaBH₄); or organic boron compounds, such as boranes, carboranes, methyl borate and organic borates.

The mass ratio of the zinc-containing compound C in terms of a zinc element to the boron-containing compound D in terms of a boron element (W_{Zn}/W_{B}) is 150:1 to 750:1. The boron-containing compound D is a suitable adhesion promoter in the hot forming process because boron oxides, borates or organic boron compounds can decompose into B₂O₃ under heat treatment. B₂O₃ functions as a flux and network-forming agent, which, when combined with the zinc-containing compound C, form zinc borates (e.g., B₂O₆Zn₃) solid solutions, which improves the adhesion of the surface composite coating layer to the surface of Al or AlSi-based coated steel sheets after hot forming.

The amount of the water-soluble thickener E added is 0.01 to 0.5 parts. The reason for this is as follows. When the parts by mass of the water-soluble thickener is less than 0.01 parts, it has no obvious thickening effect. When the parts by mass of the water-soluble thickener exceeds 0.5 parts, it is very likely to result in poor uniformity of the surface composite coating layer on the surface of the Al or AlSi-based coated steel, deteriorates the leveling of the aqueous surface treatment liquid after coating.

The water-soluble thickener E is one or two or more selected from a water-soluble hydroxymethyl cellulose, a water-dispersible alkali-swellable polyacrylic acid emulsion, and a water-dispersible nonionic polyurethane associative thickening resin. The number average molecular weight of the water-soluble thickener E (such as water-soluble hydroxymethyl cellulose, water-dispersible alkali-swellable polyacrylic acid emulsion, and water-dispersible nonionic polyurethane associative thickening resin) is 50,000-100,000.

The amount of the aqueous surface improvement aid F added is 0.5-2 parts. The reason for this is as follows. When the parts by mass of the aqueous surface improvement aid is less than 0.5 parts, the aqueous surface treatment liquid cannot play a good spreading and leveling role on the surface of the Al- or AlSi-based coated steel sheet, and cannot form a well-spread and uniform composite coating layer on the surface of the Al- or AlSi-based coated steel sheet. When the parts by mass of the aqueous surface improvement aid exceeds 2 parts, it is very likely to cause that defects such as cissing and pinholes generated during the drying process of the aqueous surface treatment liquid after coating.

The aqueous surface improvement aid F is one or two selected from a water-dispersible modified polydimethylsiloxane and water-dispersible polyether modified silicone.

The above-mentioned aqueous surface treatment liquid is applied to the Al- or AlSi-coated steel sheet whose surface has been cleaned, and the aqueous surface treatment liquid is solidified at 80-180°C to form a composite coating layer on the Al- or AlSi-coated steel sheet, thereby obtaining a coated steel sheet for hot stamping. The Al- or AlSi-coated steel sheet which has a composite coating layer on the surface obtained by the above-mentioned method has excellent hot stamping processability, excellent weldability after forming, and good coatability. The method of applying the aqueous surface treatment liquid on the Al- or AlSi-coated steel sheet includes roller coating, dipping or spraying. The aqueous surface treatment liquid may be applied to one side or both sides of the Al- or AlSi-coated steel sheet.

The reason why the surface treatment liquid is solidified at 80-200°C is as follows. At 80-180°C, the solvent water and water-soluble low boiling point additives in the aqueous surface treatment liquid can be evaporated, promoting the cross-linking and film formation of the aqueous anionic polymer resin A. When the curing temperature is lower than 80°C, the dry film of the composite coating layer formed by the aqueous surface treatment liquid and the Al- or AlSi-coated steel sheet is not fully cross-linked, which may lead to a decrease in the adhesion force of the dry film. When the curing temperature is higher than 180°C, on the one hand, the surface treatment energy cost of the steel sheet will increase, and on the other hand, the performances of part of the composite coating layer will change, thereby adversely affecting the dry film of the composite coating layer. In the present disclosure, there is no particularly strict restriction on the heating and drying method of the aqueous surface treatment liquid coated on the surface of the Al- or AlSi-coated steel sheet. The heating and drying method can be different heating methods such as hot air heating, induction heating and infrared heating.

The present disclosure also provides a hot stamping method of the coated steel sheet for hot stamping, including the steps of punching, heating and stamp forming any of the above-mentioned Al- or AlSi-coated steel sheet for hot stamping with a composite coating layer on the surface. During the heating process, the punched coated steel sheet for hot stamping is heated from 50°C to an ultimate sheet temperature and held for 30-60 s; then the heated coated steel sheet for hot stamping is transferred to a mold having a cooling effect for stamp forming. During the heating process, an average heating rate is 3-12°C/s, and the ultimate sheet temperature is 850-980°C; the stamp forming process is carried out in air, with a cooling rate being ≥27°C/s before the temperature of the coated steel sheet for hot stamping is decreased to 400°C.

The coated steel sheet for hot stamping and the aqueous surface treatment liquid of the present disclosure will be further described below in combination with specific examples/embodiments.

### Examples 1-32 and Comparative Examples 1-8

In Examples 1-32 and Comparative Examples 1-8, the substrates are all hot-dip aluminum silicon (AlSi) alloy coated steel sheets. The aqueous surface treatment liquid was applied on the surface of the cleaned AlSi alloy coated steel sheet and dried at 80-180°C to form a composite coating layer having a dry film weight of 1-5 g/m² on the surface of the AlSi alloy coated steel sheet.

The steel sheet selected is preferably subjected to a hot stamp forming process, resulting in steel sheets with different strength levels, involving various properties related to mechanical deformation and failure properties, such as tensile strength, yield strength, elongation after fracture, hardness, cold bending angle. In one embodiment of the present disclosure, a steel sheet that can achieve a yield strength ≥950 MPa, a tensile strength ≥1300 MPa, an elongation after fracture ≥5% (A₅₀ₘₘ), a hardness HV10 ≥400 (or HRC ≥40) and a cold bending angle VDA (1.4 mm) ≥45° after hot stamping is selected. There is no special restriction on the upper limit of the performance of the coated steel sheet after hot stamping. Of course, considering the production cost of the steel sheet comprehensively, regarding to the coated steel sheet after hot stamp forming, the upper limit of the yield strength can be set to 1200 MPa, the upper limit of the tensile strength can be set to 1500 MPa, the upper limit of the elongation after fracture can be set to 10%, the upper limit of the hardness HV10 can be set to 500, the upper limit of the HRC can be set to 50, and the upper limit of the cold bending angle VDA can be set to 80°.

The above mechanical properties (including yield strength, tensile strength, and elongation after fracture) are measured according to GB/T 228.1-2010 "Metallic materials - Tensile testing - Part 1: Method of test at room temperature". The hardness HV10 of the coated steel sheet is measured according to GB/T 4340-2012 "Metallic materials - Vickers hardness test". The Rockwell hardness HRC is measured according to GB/T 230-2018 "Metallic materials - Rockwell hardness test". The cold bending angle VDA is measured according to VDA238-100 standard.

The chemical composition of the steel sheet comprises, by mass %, carbon (C): 0.20-0.25 wt%, silicon (Si): 0.01-0.4 wt%, manganese (Mn): 1.0-1.4 wt%, titanium (Ti): 0.02-0.05 wt%, boron (B): 0.001-0.005 wt%, and the balance being Fe and other inevitable impurities.

In the steel sheet, the addition of C ensures the mechanical strength of the steel sheet. When the C content is less than 0.2 wt%, the yield strength and tensile strength as described above cannot be obtained. On the other hand, when the C content exceeds 0.25 wt%, the steel sheet can be further hardened, but melt cracks are easily generated during hot stamping process, resulting in a decrease in elongation at break and cold bending angle performances. Therefore, the C content is preferably 0.20-0.25 wt%.

Si and C are also elements that ensure the mechanical strength of the steel sheet. When the Si content is less than 0.01 wt%, the effect of mechanical strength enhancement is not exhibited, and the yield and tensile strength as described above cannot be obtained. On the other hand, Si is an easily oxidized element. If the Si content exceeds 0.4 wt%, the surface energy of the steel sheet will be reduced, and the wettability during hot dip plating will be affected, resulting in incomplete plating or non-plating. Therefore, the Si content is preferably 0.01-0.4 wt%.

Mn is an element that improves the hardenability and strength of the steel sheet after hot stamp forming. In addition, Mn reacts with impurity element sulfur (S) to form manganese sulfide (MnS), which prevents the steel sheet from developing hot brittleness due to sulfur (S). When the Mn content is less than 1.0 wt%, the desired yield strength and tensile strength cannot be obtained. On the other hand, when the Mn content exceeds 1.4 wt%, excess residual γ phase after hot stamping may lead to a decrease in yield strength and tensile strength. Therefore, the Mn content is preferably 1.0-1.4 wt%.

Ti can improve the strength of the steel sheet and improve the heat resistance of the Al-based coating. When the Ti content is less than 0.02 wt%, the effect of improving mechanical strength and oxidation resistance cannot be obtained. On the other hand, when the Ti content is higher than 0.05 wt%, excessive Ti is easy to form carbides and nitrides that soften the steel with elements such as C and N, and there is a high possibility that the desired yield and tensile strength cannot be obtained. Therefore, the Ti content is preferably 0.02-0.05 wt%.

B is an element that plays a role in improving the mechanical strength of the steel sheet during the quenching process. When the B content is less than 0.001 wt%, there is no effect of improving the strength after quenching, and the desired yield strength and tensile strength cannot be obtained. On the other hand, when the B content exceeds 0.005 wt%, the rolling load during hot rolling increases significantly, and inclusions are easily generated in the steel sheet so that the steel sheet is embrittled, and may reduce the fatigue strength of the steel sheet. Therefore, the B content is preferably 0.001-0.005 wt%.

Furthermore, the component composition of the pre-coated steel sheet (substrate) described above is merely illustrative. The substrate of the present disclosure may also contain other components. For example, the substrate may also contain deoxidizing elements such as 0.01-0.06 wt% of aluminum (Al) and 0.01-0.35 wt% of chromium (Cr). Al and Cr have similar effects to Mn, and also have the effect of improving the hardenability of the steel sheet. In addition, the steel sheet also contains inevitable impurities introduced in the manufacturing process.

The Al or AlSi coating is formed on one or both sides of the above-mentioned substrate. In this embodiment, the Al or AlSi coating is formed on one or both sides of the substrate by a hot-dip coating method, but it is not limited to such coating method. The function of the Al or AlSi coating is to prevent the formation of oxide scale (mainly Fe oxides) on the surface of the steel sheet during the heating process of hot stamp forming. Therefore, it is preferred to apply the coating on both sides of the steel sheet. The the content of the Al component in the Al coating is 70 wt% or more, while the content of other elements is not particularly limited.

In addition to Al, the AlSi coating used in this embodiment also contains silicon (Si). Si forms tough phases such as Fe₂SiAl₇, Fe₂SiAl₂ and Fe(Al, Si) at the interface between the substrate and the coating during hot-dip coating, thereby inhibiting the formation of Fe-Al brittle phase at the above interface. When the amount of Si added in the coating is less than 5 wt%, the proportion of Fe-Al brittle phase at the interface between the coating and the substrate is high during hot-dip coating, and cracks that penetrate the coating are easily formed during processing, which damages the corrosion resistance of the processed parts. In addition, when the amount of Si added is greater than 11 wt%, the corrosion resistance and weldability of the coating decrease, so the amount of Si added in the AlSi coating is preferably 5-11 wt%.

In addition to Al and Si, the AlSi coating also contains 2 to 4 wt% of Fe dissolved from the equipment and substrate during the plating process of substrate, and may also contain inevitable impurity elements such as Zn, Mg, Ca, and Mn.

The AlSi coating undergoes alloying with Fe in the substrate to varying degrees during hot-dip and hot-stamping heating. Therefore, the coating is not necessarily composed of a layer whose composition is uniform, but may also contain a phase-separated layer (alloy layer) with partially different degrees of alloying. The AlSi-coated steel sheet is obtained by immersing the pretreated steel strip in a molten liquid consisting of Al and 5-11 mass (wt) % of Si on a continuous hot-dip AlSi production line. The coating amount of the AlSi coating on each side of the substrate is preferably 25-90 g/m². When the coating amount is less than 25 g/m², the anti-oxidation effect of the above-mentioned Al or AlSi-based coating cannot be fully obtained. In addition, when the coating amount is greater than 90 g/m², the surface roughness of the coated steel sheet increases, and the hot stamping heating process is accompanied by the formation of an Al-Fe alloy layer whose surface hardness is high, and the surface roughness further increases, resulting in an increase in the friction coefficient between the steel sheet and the die during the hot stamp forming process.

The present disclosure focuses on the specific composite coating layer formed on the coated steel sheet, so the composition and performance of the coated steel sheet used are not particularly limited. The descriptions of the composition and performance of the substrate and the coating of the coated steel sheets above are merely illustrative. Users can choose different coated steel sheets for coating according to their actual needs.

Table 1 lists the parts by mass of each component in the solids of the aqueous surface treatment liquid in Examples 1-32 and Comparative Examples 1-8. The following aqueous surface treatment liquids are all used to form a composite coating layer on the surface of a coated steel sheet with an AlSi coating.

**Table 1**

| No. | Aqueous anionic polymer resin A | | Tungsten-containing compound B | | Zinc-containing compound C | | Boron-containing compound D | | mass ratio of zinc in zinc-containing compound C to boron in boron-containing compound D | Water-soluble thickener E | | Aqueous surface improvement aid F | |
|---|---|---|---|---|---|---|---|---|---|---|---|---|---|
| | Type | Part by mass | Type | Part by mass of tungsten element | Type | Part by mass of zinc element | Type | Part by mass of boron element | W_{Zn}/W_{B} | Type | Part by mass | Type | Part by mass |
| Example 1 | A1 | 30.25 | B1-1 | 40 | C1-1 | 15 | D1 | 0.03 | 500 | E1 | 0.01 | F1 | 0.5 |
| Example 2 | A1 | 51.3 | B1-2 | 28.3 | C1-1 | 10 | D1 | 0.03 | 333 | E1 | 0.01 | F1 | 0.5 |
| Example 3 | A1 | 65 | B1-3 | 20 | C1-1 | 7.4 | D1 | 0.03 | 247 | E1 | 0.01 | F1 | 0.5 |
| Example 4 | A1 | 15 | B2 | 40 | C1-1 | 14.8 | D1 | 0.03 | 493 | E2 | 0.5 | F1 | 2 |
| Example 5 | A1 | 20 | B2 | 38 | C1-2 | 13.4 | D1 | 0.02 | 670 | E2 | 0.5 | F1 | 2 |
| Example 6 | A1 | 30 | B2 | 32 | C1-3 | 13.4 | D1 | 0.02 | 670 | E2 | 0.4 | F1 | 1.7 |
| Example 7 | A1 | 40 | B2 | 25 | C1-1 | 14 | D1 | 0.03 | 467 | E2 | 0.5 | F1 | 2 |
| Example 8 | A1 | 50.6 | B2 | 21.5 | C1-2 | 10 | D1 | 0.02 | 500 | E2 | 0.5 | F1 | 2 |
| Example 9 | A1 | 65 | B2 | 18.9 | C1-1 | 3 | D1 | 0.004 | 750 | E3 | 0.1 | F2 | 1 |
| Example 10 | A1 | 20 | B2 | 35 | C2 | 7.6 | D1 | 0.02 | 380 | E3 | 0.5 | F2 | 1.3 |
| Example 11 | A1 | 30 | B2 | 30 | C2 | 7 | D1 | 0.02 | 350 | E3 | 0.5 | F2 | 1.1 |
| Example 12 | A1 | 40 | B2 | 25 | C2 | 6.3 | D1 | 0.02 | 315 | E3 | 0.5 | F1 | 1.1 |
| Example 13 | A1 | 50 | B2 | 20 | C2 | 5.5 | D1 | 0.03 | 183 | E3 | 0.4 | F1 | 1.5 |
| Example 14 | A1 | 65 | B2 | 12 | C2 | 4.7 | D1 | 0.03 | 157 | E3 | 0.4 | F1 | 1.7 |
| Example 15 | A1 | 15 | B2 | 30.5 | C3 | 3.5 | D2 | 0.01 | 350 | E3 | 0.4 | F1 | 1.8 |
| Example 16 | A1 | 20 | B2 | 28 | C3 | 3.4 | D2 | 0.01 | 340 | E3 | 0.4 | F1 | 1.8 |
| Example 17 | A1 | 30 | B2 | 21 | C3 | 3.5 | D2 | 0.01 | 350 | E3 | 0.4 | F1 | 2 |
| Example 18 | A1 | 40 | B2 | 15.5 | C3 | 3.4 | D2 | 0.01 | 340 | E3 | 0.2 | F1 | 2 |
| Example 19 | A1 | 50 | B2 | 10 | C3 | 3.3 | D2 | 0.01 | 330 | E3 | 0.1 | F1 | 1.9 |
| Example 20 | A1 | 45 | B2 | 29 | C1-1 | 5.7 | D2 | 0.009 | 633 | E3 | 0.11 | F2 | 1.4 |
| Example 21 | A1 | 65 | B2 | 17 | C1-1 | 5.1 | D2 | 0.018 | 283 | E3 | 0.2 | F2 | 1.2 |
| Example 22 | A1 | 30 | B2 | 34.7 | C1-2 | 10 | D2 | 0.015 | 667 | E3 | 0.5 | F2 | 1.5 |
| Example 23 | A1 | 15 | B2 | 40 | C1-2 | 15 | D2 | 0.03 | 500 | E3 | 0.5 | F2 | 1.7 |
| Example 24 | A1 | 30 | B3 | 31.3 | C1-2 | 10 | D2 | 0.015 | 667 | E3 | 0.5 | F2 | 1.5 |
| Example 25 | A1 | 30 | B4 | 37.5 | C1-2 | 10 | D2 | 0.015 | 667 | E3 | 0.5 | F2 | 1.5 |
| Example 26 | A1 | 30 | B5 | 40 | C1-2 | 10.3 | D2 | 0.015 | 687 | E3 | 0.5 | F2 | 1.5 |
| Example 27 | A1 | 43 | B6 | 40 | C1-3 | 10 | D2 | 0.015 | 667 | E3 | 0.4 | F2 | 1.5 |
| Example 28 | A2 | 30 | B2 | 34.7 | C1-3 | 10 | D2 | 0.015 | 667 | E3 | 0.5 | F2 | 1.5 |
| Example 29 | A3 | 30 | B2 | 34.7 | C1-3 | 10 | D2 | 0.015 | 667 | E3 | 0.5 | F2 | 1.5 |
| Example 30 | A1 | 30 | B2 | 29 | C1-1 | 5.8 | D2 | 0.015 | 387 | E3 | 0.11 | F2 | 1.4 |
| | | | B4 | 10 | | | | | | | | | |
| Example 31 | A1 | 30 | B2 | 30 | C1-1 | 7.5 | D2 | 0.03 | 250 | E3 | 0.11 | F2 | 1.4 |
| | | | B5 | 8 | | | | | | | | | |
| Example 32 | A1 | 15 | B2 | 29 | C1-1 | 5.8 | D2 | 0.015 | 387 | E3 | 0.11 | F2 | 1.4 |
| | A2 | 15 | B4 | 10 | | | | | | | | | |
| Comparative Example 1 | / | / | B2 | 56 | C1-1 | 6.3 | D2 | 0.009 | 700 | E3 | 0.6 | F2 | 2 |
| Comparative Example 2 | A1 | 5 | B2 | 53 | C1-2 | 6.3 | D2 | 0.009 | 700 | E3 | 0.4 | F2 | 2 |
| Comparative Example 3 | A1 | 10 | B2 | 50 | C1-3 | 6.3 | D2 | 0.009 | 700 | E3 | 0.11 | F2 | 2 |
| Comparative Example 4 | A1 | 90 | / | / | C1-1 | 6.3 | D2 | 0.009 | 700 | E3 | 0.11 | F2 | 2 |
| Comparative Example 5 | A1 | 30 | B2 | 34.7 | C1-1 | 10 | D2 | 0.001 | 10000 | E3 | 0.5 | F2 | 1.6 |
| Comparative Example 6 | A1 | 30 | B2 | 34.1 | C1-1 | 10 | D2 | 0.2 | 50 | E3 | 0.5 | F2 | 1.6 |
| Comparative Example 7 | A2 | 90 | / | / | C1-1 | 6.3 | D2 | 0.009 | 700 | E3 | 0.11 | F2 | 2 |
| Comparative Example 8 | / | / | B6 | 68.7 | C1-3 | 20 | D2 | 0.015 | 1333 | E3 | 0.4 | F2 | 1.5 |

| | | | | | | | | | | | | | |
|---|---|---|---|---|---|---|---|---|---|---|---|---|---|
| *Note: A1 is an aqueous acrylic resin, A2 is an aqueous epoxy resin, A3 is an aqueous alkyd resin; B1-1 is nano tungsten trioxide (~20 nm), B1-2 is nano tungsten trioxide (~200 nm), B1-3 is nano tungsten trioxide (~500 nm), B2 is sodium tungstate, B3 is potassium tungstate, B4 is magnesium tungstate, B5 ammonium tungstate; B6 is tungsten carbide; C1-1 is nano zinc oxide (~20 nm), C1-2 is nano zinc oxide (~200 nm), C1-3 is nano zinc oxide (~500 nm), C2 is zinc nitrate, C3 is zinc stearate; D1 is boron oxide, D2 is sodium tetraborate; E1 is water-soluble hydroxymethyl cellulose, E2 is water-dispersible alkali-swellable polyacrylic acid emulsion, E3 is water-dispersible non-ionic polyurethane associative thickening resin; F1 is water-dispersible modified polydimethylsiloxane, F2 is water-dispersible polyether modified silicone. | | | | | | | | | | | | | |

Table 2 lists the specifications, the curing temperatures used to form the composite coating layers, and the dry film weights of the composite coating layers of the coated steel sheets with an AlSi coating in Examples 1-32 and Comparative Examples 1-8.

**Table 2**

| No. | Specification of coated steel sheet | | Curing temperature (°C) | Dry film weight of composite coating layer (g/m²) |
|---|---|---|---|---|
| | Substrate thickness (mm) | AlSi coating weight of one side (g/m²) | | |
| Example 1 | 1.4 | 75 | 110 | 2.1 |
| Example 2 | 1.4 | 45 | 120 | 3.1 |
| Example 3 | 1.4 | 75 | 120 | 3.5 |
| Example 4 | 1.4 | 75 | 180 | 1.8 |
| Example 5 | 1.4 | 75 | 130 | 2 |
| Example 6 | 1.4 | 45 | 110 | 2.2 |
| Example 7 | 1.4 | 75 | 100 | 2.3 |
| Example 8 | 1.4 | 75 | 100 | 3.2 |
| Example 9 | 1.4 | 75 | 80 | 2.2 |
| Example 10 | 1.4 | 45 | 110 | 2.5 |
| Example 11 | 1.4 | 75 | 110 | 1.9 |
| Example 12 | 1.4 | 75 | 130 | 4.5 |
| Example 13 | 1.4 | 75 | 120 | 4.8 |
| Example 14 | 1.4 | 75 | 120 | 5 |
| Example 15 | 1.4 | 75 | 130 | 3.2 |
| Example 16 | 1.4 | 75 | 120 | 2.8 |
| Example 17 | 1.2 | 30 | 120 | 2.2 |
| Example 18 | 1.4 | 75 | 130 | 2.5 |
| Example 19 | 1.2 | 30 | 110 | 3 |
| Example 20 | 1.4 | 75 | 110 | 1.8 |
| Example 21 | 1.4 | 75 | 110 | 2.4 |
| Example 22 | 1.4 | 75 | 110 | 2.6 |
| Example 23 | 1.4 | 75 | 110 | 2.3 |
| Example 24 | 1.4 | 75 | 110 | 2.5 |
| Example 25 | 1.4 | 75 | 110 | 2.2 |
| Example 26 | 1.4 | 75 | 130 | 2.8 |
| Example 27 | 1.4 | 75 | 110 | 2.5 |
| Example 28 | 1.4 | 75 | 120 | 2.2 |
| Example 29 | 1.4 | 75 | 130 | 2.6 |
| Example 30 | 1.4 | 75 | 110 | 2.3 |
| Example 31 | 2 | 75 | 90 | 2.9 |
| Example 32 | 2 | 75 | 110 | 1.9 |
| Comparative Example 1 | 1.4 | 75 | 230 | 6.6 (discontinuous film) |
| Comparative Example 2 | 1.4 | 75 | 190 | 0.5 |
| Comparative Example 3 | 1.4 | 75 | 110 | 0.9 |
| Comparative Example 4 | 1.4 | 75 | 110 | 3.3 |
| Comparative Example 5 | 1.4 | 75 | 110 | 2.8 |
| Comparative Example 6 | 1.4 | 75 | 110 | 2.2 |
| Comparative Example 7 | 1.4 | 75 | 120 | 0.5 |
| Comparative Example 8 | 1.4 | 75 | 230 | - (no film formation) |

After the aqueous surface treatment liquid was solidified on the surface of the coated steel sheet, a coated steel sheet for hot stamping was obtained. The performance tests of the coated steel sheets for hot stamping in Examples 1-32 and Comparative Examples 1-8 were carried out before and after hot stamping, respectively. The hot stamping method includes the steps of punching, heating and stamp forming the above-mentioned coated steel sheets for hot stamping. The specific process conditions are listed in Table 3. The mold used for stamp forming the coated steel sheets for hot stamping in Examples 1-32 and Comparative Examples 1-8 is a flat plate mold having a water cooling function.

**Table 3**

| No. | Ultimate sheet temperature (°C) | Heating rate (°C/s) | Holding time (s) | Cooling rate before the sheet temperature decreases to 400 °C* (°C/s) |
|---|---|---|---|---|
| Example 1 | 930 | 4.5 | 30 | 35 |
| Example 2 | 930 | 4.5 | 30 | 35 |
| Example 3 | 930 | 4.5 | 30 | 35 |
| Example 4 | 930 | 4.5 | 30 | 35 |
| Example 5 | 930 | 4.5 | 30 | 35 |
| Example 6 | 930 | 4.5 | 30 | 35 |
| Example 7 | 930 | 4.5 | 30 | 35 |
| Example 8 | 930 | 4.5 | 30 | 35 |
| Example 9 | 930 | 4.5 | 30 | 35 |
| Example 10 | 930 | 4.5 | 30 | 35 |
| Example 11 | 930 | 4.5 | 30 | 35 |
| Example 12 | 850 | 3 | 60 | 35 |
| Example 13 | 860 | 3 | 50 | 35 |
| Example 14 | 870 | 4 | 40 | 35 |
| Example 15 | 880 | 4 | 30 | 35 |
| Example 16 | 890 | 4 | 30 | 35 |
| Example 17 | 900 | 4.5 | 30 | 35 |
| Example 18 | 910 | 4.5 | 30 | 35 |
| Example 19 | 920 | 4.5 | 30 | 35 |
| Example 20 | 930 | 4.5 | 30 | 200 |
| Example 21 | 940 | 4.5 | 30 | 35 |
| Example 22 | 950 | 5 | 30 | 35 |
| Example 23 | 960 | 5 | 30 | 35 |
| Example 24 | 970 | 5 | 30 | 35 |
| Example 25 | 980 | 10 | 30 | 35 |
| Example 26 | 980 | 12 | 60 | 35 |
| Example 27 | 930 | 5 | 50 | 35 |
| Example 28 | 930 | 5 | 40 | 35 |
| Example 29 | 930 | 5 | 30 | 35 |
| Example 30 | 930 | 12 | 30 | 35 |
| Example 31 | 930 | 12 | 30 | 35 |
| Example 32 | 930 | 10 | 30 | 35 |
| Comparative Example 1 | 840 | 4 | 30 | 35 |
| Comparative Example 2 | 820 | 4 | 30 | 35 |
| Comparative Example 3 | 800 | 4 | 30 | 35 |
| Comparative Example 4 | 750 | 3 | 30 | 35 |
| Comparative Example 5 | 1000 | 5 | 30 | 35 |
| Comparative Example 6 | 930 | 1 | 120 | 35 |
| Comparative Example 7 | 930 | 2 | 120 | 35 |
| Comparative Example 8 | 930 | 1 | 300 | 35 |

| | | | | |
|---|---|---|---|---|
| * The cooling rate was controlled by adjusting the flow rate of cooling water and pressure holding time in the flat plate mold that fits tightly against the steel sheet and has a water-cooling function. In Example 20, the cooling rate of 200°C was achieved by spraying water mist on the surface of the steel sheet. | | | | |

The performance tests of the coated steel sheet for hot stamping were carried out according to the test methods as described below. The test results are listed in Table 4 (the following performance tests 1-3 were carried out on the coated steel sheet for hot stamping before hot stamping, and performance tests 4-9 were carried out on the coated steel sheet for hot stamping after hot stamping).

### 1) Adhesion Test of Surface Coating (Before Hot Stamping)

Adhesion Test: A 3M 610 tape was applied to the surface of the coated steel sheet for hot stamping, while ensuring that the tape was fully attached to the surface of the steel sheet. The tape was then quickly pulled off by using a force at an angle of 60° to the surface of the sample. The content of W element or Zn element (Comparative Example) on the surface of the steel sheet before and after the test was determined by using XRF (X-ray fluorescence spectrometer) to obtain the residual amount (mass fraction) of the corresponding element. The meanings of the symbols in the corresponding test results in Table 4 are as follows:
⊚ (Excellent): Residual amount 95-100%
o (Good): Residual amount 80-94%
△ (Fair): Residual amount 50-79%
× (Poor): Residual amount <49%

### 2) Solvent Resistance Test

A fine cloth dipped in 80 % ethanol by volume is used to wipe the surface of the coated steel sheet for hot stamping back and forth 30 times. The content of W element or Zn element (Comparative Example) on the surface of the steel sheet before and after the wiping was determined by using XRF to obtain the residual amount (mass fraction) of the corresponding element after the wiping. The meanings of the symbols in the corresponding test results are as follows:
⊚ (Excellent): Residual amount 95-100%
o (Good): Residual amount 80-94%
△ (Fair): Residual amount 50-79%
× (Poor): Residual amount <49%

### 3) Heat and Humidity Resistance Test

The coated steel sheet for hot stamping was placed in a constant temperature and humidity chamber at 49°C and 98% humidity for 120 hours. The heat and humidity resistance of the coated steel sheet was evaluated by its surface rust area. The specific evaluation was carried out according to ISO-10289: Methods for corrosion testing of metallic and other inorganic coatings on metallic substrates -- Rating of test specimens and manufactured articles subjected to corrosion tests. The meanings of the symbols in the corresponding test results are as follows:
⊚ (Excellent): Surface rusted area ≤ 5%
o (Good): Surface rusted area 5%-10%
△ (Fair): Surface rusted area 11%-50%
× (Poor): Surface rusted area > 51%

### 4) Adhesion Test of Surface Film (After Hot Stamping)

Adhesion Test: A 3M 610 tape was applied to the surface of the test sample sheet, while ensuring that the tape was fully attached to the surface of the steel sheet. The tape was then quickly pulled off by using a force at an angle of 60° to the surface of the sample. The content of W element or Zn element (Comparative Example) on the surface of the steel sheet before and after the test was determined by using XRF to obtain the residual amount (mass fraction) of the corresponding element. The meanings of the symbols in the corresponding test results are as follows:
⊚ (Excellent): Residual amount 95-100%
o (Good): Residual amount 80-94%
△ (Fair): Residual amount 50-79%
× (Poor): Residual amount <49%

### 5) Thermal Lubricity Test

The thermal lubricity test of the coated steel sheet for hot stamping was carried out using the testing machine for testing the high temperature friction coefficient of the sheet strip shown in Figure 2. A 500 mm × 100 mm test sample sheet 20 was welded with a thermocouple, and then inserted into a heating furnace 29 and kept at 930 °C for 4 minutes. A stepper motor 21 was operated to drive the coupling 22 to pull out the test sample sheet 20. When it was monitored by a recorder 24 that the surface temperature of the test sample sheet 20 dropped to 700°C, a load of 3 MPa (loading pressure) was applied to the surface of the test sample sheet by a mold (the mold has a surface area of 10 mm × 10 mm and includes an upper mold 26 and a lower mold 28). The mold surface was cooled through a cooling water channel 27 inside the mold. The coupling 22 was driven by the stepper motor 21 to drag the test sample sheet 20 at a speed of 20 mm/s. The pull-out load was recorded by a force sensor 25. The thermal friction coefficient was obtained according to the formula: thermal friction coefficient = pull-out load / (2 × loading pressure × mold surface area). The meanings of the symbols in the corresponding test results are as follows:
⊚ (Excellent): Thermal friction coefficient ≤ 0.35
o (Good): Thermal friction coefficient 0.35-0.4
△ (Fair): Thermal friction coefficient 0.4-0.5
× (Poor): Thermal friction coefficient > 0.5

### 6) Spot Weldability Test

The test sample sheet was cut into a dimension of 30 mm × 80 mm. The available current range for spot welding (the difference between the upper limit current and the lower limit current) was measured. The measurement conditions are as follows: the lower limit current is defined as the current at which the fusion diameter reaches 4.25d^{1/2} (where d is the sheet thickness). For example, with a sheet thickness of 1.4 mm, the lower limit current is 5.0 kA. The upper limit current is defined as the current at which welding spatter phenomenon first occurs.

Electrode: Chromium copper material, DR (Dezincification resistance of brass) type (tip diameter: 6 mm, 40R radius)
Pressure: 4300 N
Power-on Time: 20 cycles (50 Hz)

The meanings of the symbols in the corresponding test results are as follows:
o (Good): Available current range ≥1.5 kA
× (Poor): Available current range <1.5 kA

### 7) Adhesiveness Test

The test sample sheet was cut into a dimension of 25 mm × 100 mm. After wiping the surface of the sample sheet with acetone to remove surface contaminants, the sample sheet was immersed in an rust prevention oil for 3-5 seconds, and then taken out from the oil and placed vertically for 24 hours. Next, a structural adhesive with a length of about 13 mm and a thickness of about 0.1 mm (the adhesive thickness was determined using glass beads with a diameter of 0.1 mm, with no more than 10 beads added in the adhesive area) was applied on the short side end of one sample sheet coated with the oil, and the end of the other sample sheet coated with the oil was covered at the adhesive positions (the two sample sheets were aligned in the width direction). The adhesive-bonding configuration of the two sample sheets is shown in Figure 3. Then, the two sample sheets were fixed with a clamp so that the bonded assembly remained in the form shown in Figure 3. The assembly was then heated in an oven at 170°C for 20 minutes, and then placed under standard conditions (101.3 kPa; 25°C) for 24 hours before testing. The two samples were pulled in opposite directions. For example, sample 1 was pulled in the F1 direction, and sample 2 was pulled in the F2 direction so as to break the bonded assembly. F1 and F2 were on the axis in the length direction of the sample sheets on which they act, respectively. The tensile forces F1 and F2 were applied by stretching clamp, with a pulling speed of 50 mm/min. The failure form of the bonded assembly was recorded at the time of break (according to GB/T 16997-1997 "Adhesives-Designation of main failure patterns", the failure phenomenon of the adhesive-bonding parts was evaluated, wherein CF: the failure phenomenon generated on the structural adhesive body; AF: the failure phenomenon of the structural adhesive being separated from the bonding substrate surface; PF: the failure phenomenon in the adhesive-bonding substrate or AlSi coating). The meanings of the symbols in the corresponding test results are as follows:
o (Good): Failure form of the structural adhesive being separated from the bonding substrate surface is CF
× (Poor): Failure form of the structural adhesive being separated from the bonding substrate surface is AF or PF

### 8) Chemical Conversion Treatability Test

After the surface contaminants was removed from the test sample sheet with an alkaline degreasing agent (Parkerizing FC-E2032), the test sample sheet was rinsed with pure water and soaked in a surface conditioning agent (Parkerizing PL-Z) for 30 seconds, and then the test sample sheet was transferred and soaked in a phosphating treatment liquid (Parkerizing PB-L3020) at 35°C for 2 minutes. The meanings of the symbols in the corresponding test results are as follows:
o (Good): Zinc phosphate crystalline coating precipitated
× (Poor): No zinc phosphate crystalline coating precipitated

### 9) Corrosion Resistance Test After Coating:

After the above chemical conversion treatment was completed, the test sample sheet was coated with 20 µm electrophoretic paint (Kansai HG-350), and then baked and solidified in an oven at 170°C for 20 minutes. The test sample sheet after coating was evaluated according to the method specified in the Japanese JASO M610 standard. The coating was pre-scribed with a knife, and tested for 180 cycles (60 days). The maximum blister width on one side starting from the scribe line was measured. The meanings of the symbols in the corresponding test results are as follows:
⊚ (Excellent): Blister width ≤ 3 mm
o (Good): Blister width 3-6 mm
× (Poor): Blister width > 6 mm

**Table 4**

| | Before hot stamping | | | After hot stamping | | | | | |
|---|---|---|---|---|---|---|---|---|---|
| | Adhesion of composite coating layer | Solvent resistance | Heat and humidity resistance | Adhesion of composite coating layer | Thermal lubricity | Spot weldability | Adhesiveness | Chemical conversion treatability | Corrosion resistance after coating |
| Example 1 | ⊚ | ⊚ | ⊚ | ⊚ | ⊚ | ○ | ○ | ○ | ⊚ |
| Example 2 | ⊚ | ⊚ | ⊚ | ⊚ | ⊚ | ○ | ○ | ○ | ⊚ |
| Example 3 | ⊚ | ⊚ | ⊚ | ⊚ | ⊚ | ○ | ○ | ○ | ○ |
| Example 4 | ○ | ○ | ○ | ○ | ⊚ | ○ | ○ | ○ | ⊚ |
| Example 5 | ○ | ○ | ○ | ○ | ⊚ | ○ | ○ | ○ | ⊚ |
| Example 6 | ⊚ | ⊚ | ⊚ | ⊚ | ⊚ | ○ | ○ | ○ | ⊚ |
| Example 7 | ⊚ | ⊚ | ⊚ | ⊚ | ⊚ | ○ | ○ | ○ | ⊚ |
| Example 8 | ⊚ | ⊚ | ⊚ | ⊚ | ⊚ | ○ | ○ | ○ | ⊚ |
| Example 9 | ⊚ | ⊚ | ⊚ | ⊚ | ○ | ○ | ○ | ○ | ○ |
| Example 10 | ⊚ | ○ | ○ | ⊚ | ⊚ | ○ | ○ | ○ | ⊚ |
| Example 11 | ⊚ | ⊚ | ⊚ | ⊚ | ⊚ | ○ | ○ | ○ | ⊚ |
| Example 12 | ⊚ | ⊚ | ⊚ | ⊚ | ⊚ | ○ | ○ | ○ | ⊚ |
| Example 13 | ⊚ | ⊚ | ⊚ | ⊚ | ○ | ○ | ○ | ○ | ⊚ |
| Example 14 | ⊚ | ⊚ | ⊚ | ⊚ | ○ | ○ | ○ | ○ | ⊚ |
| Example 15 | ○ | ○ | ○ | ○ | ⊚ | ○ | ○ | ○ | ○ |
| Example 16 | ⊚ | ⊚ | ⊚ | ⊚ | ⊚ | ○ | ○ | ○ | ○ |
| Example 17 | ⊚ | ⊚ | ⊚ | ⊚ | ⊚ | ○ | ○ | ○ | ○ |
| Example 18 | ⊚ | ⊚ | ⊚ | ⊚ | ○ | ○ | ○ | ○ | ○ |
| Example 19 | ⊚ | ⊚ | ⊚ | ⊚ | ○ | ○ | ○ | ○ | ○ |
| Example 20 | ⊚ | ⊚ | ⊚ | ⊚ | ⊚ | ○ | ○ | ○ | ⊚ |
| Example 21 | ⊚ | ⊚ | ⊚ | ⊚ | ○ | ○ | ○ | ○ | ⊚ |
| Example 22 | ⊚ | ⊚ | ⊚ | ⊚ | ⊚ | ○ | ○ | ○ | ⊚ |
| Example 23 | ○ | ○ | ○ | ○ | ⊚ | ○ | ○ | ○ | ⊚ |
| Example 24 | ⊚ | ⊚ | ○ | ⊚ | ⊚ | ○ | ○ | ○ | ⊚ |
| Example 25 | ⊚ | ⊚ | ○ | ⊚ | ⊚ | ○ | ○ | ○ | ⊚ |
| Example 26 | ⊚ | ⊚ | ⊚ | ⊚ | ⊚ | ○ | ○ | ○ | ⊚ |
| Example 27 | ⊚ | ⊚ | ⊚ | ⊚ | ⊚ | ○ | ○ | ○ | ⊚ |
| Example 28 | ○ | ⊚ | ⊚ | ○ | ⊚ | ○ | ○ | ○ | ⊚ |
| Example 29 | ○ | ⊚ | ○ | ○ | ⊚ | ○ | ○ | ○ | ⊚ |
| Example 30 | ⊚ | ⊚ | ⊚ | ⊚ | ⊚ | ○ | ○ | ○ | ⊚ |
| Example 31 | ⊚ | ⊚ | ⊚ | ⊚ | ⊚ | ○ | ○ | ○ | ⊚ |
| Example 32 | ○ | ○ | ⊚ | ○ | ⊚ | ○ | ○ | ○ | ⊚ |
| Comparative Example 1 | × | × | × | × | × | ○ | × | × | × |
| Comparative Example 2 | × | × | × | × | △ | × | × | × | × |
| Comparative Example 3 | △ | × | △ | △ | ○ | × | × | × | × |
| Comparative Example 4 | ⊚ | △ | ⊚ | ⊚ | × | ○ | ○ | ○ | ○ |
| Comparative Example 5 | ⊚ | ⊚ | ⊚ | ⊚ | ○ | ○ | × | × | ○ |
| Comparative Example 6 | ⊚ | ⊚ | ⊚ | ⊚ | ○ | ○ | ○ | ○ | × |
| Comparative Example 7 | ⊚ | ⊚ | ⊚ | ⊚ | × | ○ | ○ | × | × |
| Comparative Example 8 | × | × | × | × | × | ○ | × | × | × |

It can be seen from Table 4 that after the coated steel sheets for hot stamping in Examples 1-32 were subjected to the above tests, the evaluation results were all "⊚" and "○", indicating that the coated steel sheets for hot stamping including the composite coating layer have excellent or good comprehensive properties in terms of solvent resistance, corrosion resistance, high-temperature thermal lubricity, weldability, adhesiveness and coatability after hot stamping.

It can be seen by combining Table 1 with Table 4 that compared with Examples 1-32, due to the low content of the aqueous anionic polymer resin A in the surface treatment agent of Comparative Examples 1-3 and 8, the film-forming property of the applied aqueous surface treatment liquid after drying is poor, and the adhesion force, solvent resistance and corrosion resistance of the composite coating layer are poor. In addition, in Comparative Examples 4 and 7, since no tungsten-containing compound B is present, there is no tungsten oxide compound having a high-temperature lubrication function in the hot stamping process, resulting in poor high-temperature thermal lubrication. In Comparative Example 5, the amount of the boron-containing compound D added is low, and the mass ratio (W_{Zn}/W_{B}) in terms of the elements zinc (Zn) and boron (B) reaches 10,000, and the zinc-containing compound C does not form a good bonding with the coated steel sheet during the heating stage of the hot stamping process, and a loose zinc oxide layer is formed on the surface of the coated steel sheet, resulting in poor weldability and adhesiveness of the obtained coated steel sheet for hot stamping. In Comparative Example 6, the amount of the boron-containing compound D added is excessively large, and the mass ratio (W_{Zn}/W_{B}) in terms of the element zinc (Zn) and boron (B) is 50. The boron-containing compound D affects the formation of the zinc phosphate crystalline coating during the chemical conversion treatment after hot pressing, and the corrosion resistance of the coated steel sheet for hot stamping after coating is poor.

In summary, in the present disclosure, the surface of the coated steel sheet is coated with an aqueous surface treatment liquid, so that good high-temperature thermal lubricity can achieved in hot stamping process, and the processability of the coated steel sheet for hot stamping is improved. Therefore, compared with materials that have not been treated with an aqueous surface treatment liquid, complex deformation forming processing can be achieved, and the wear of the surface of the hot stamped mold can be reduced, the frequency of mold repair can be reduced, and production efficiency can be improved. For the parts after hot stamping process, good weldability and adhesiveness can be achieved, the chemical conversion treatability is good, and the corrosion resistance after coating is also improved. According to the present disclosure, the application scope of hot stamping process of the coated steel sheet for hot stamping is expanded, and the applicability of related parts in the automotive and mechanical processing industries is also improved.

It should be understood by those skilled in the art that the above embodiments are merely illustrative of the present disclosure, and are not intended to limit the present disclosure. Any changes and modifications to the above embodiments within the spirit of the present disclosure will fall within the scope of the claims of the present disclosure.

## Claims

1. A coated steel sheet for hot stamping, wherein the coated steel sheet for hot stamping includes a coated steel sheet and a composite coating layer formed by applying an aqueous surface treatment liquid on the coated steel sheet;
wherein the coated steel sheet includes a substrate and an Al- or AlSi-containing coating formed on one side or both sides of the substrate;
wherein the composite coating layer contains an aqueous anionic polymer resin A, a tungsten-containing compound B, a zinc-containing compound C, a boron-containing compound D, a water-soluble thickener E and an aqueous surface improvement aid F.

2. The coated steel sheet for hot stamping according to claim 1, wherein the composite coating layer has a dry film weight of 1-5 g/m².

3. The coated steel sheet for hot stamping according to claim 1, wherein the composite coating layer comprises the following components in parts by mass:
the aqueous anionic polymer resin A: 15-65 parts, preferably 20-50 parts;
the tungsten-containing compound B: 10-40 parts, preferably 15-35 parts, in terms of parts by mass of tungsten element;
the zinc-containing compound C: 3-15 parts, in terms of parts by mass of zinc element;
the boron-containing compound D: 0.004-0.03 parts, preferably 0.01-0.03 parts, in terms of parts by mass of boron element;
the water-soluble thickener E: 0.01-0.5 parts, preferably 0.1-0.4 parts;
the aqueous surface improvement aid F: 0.5-2 parts, preferably 1-1.5 parts.

4. The coated steel sheet for hot stamping according to claim 1, wherein the substrate comprises the following components in mass %: C: 0.20-0.25 wt%, Si: 0.01-0.4 wt%, Mn: 1.0-1.4 wt%, Ti: 0.02-0.05 wt%, B: 0.001-0.005 wt%, and the balance being Fe and other inevitable impurities; and/or the Al-containing coating contains 70 wt% or more of Al; and/or the AlSi coating contains 5-11 wt% of Si.

5. An aqueous surface treatment liquid for forming the composite coating layer according to any one of claims 1 to 4, wherein the aqueous surface treatment liquid is formed by dispersing a solid phase substance in water;
wherein the solid phase substance comprises the following components in parts by mass:
an aqueous anionic polymer resin A: 15-65 parts;
a tungsten-containing compound B: 10-40 parts, in terms of parts by mass of tungsten element;
a zinc-containing compound C: 3-15 parts, in terms of parts by mass of zinc element;
a boron-containing compound D: 0.004-0.03 parts, preferably 0.01-0.03 parts, in terms of parts by mass of boron element;
a water-soluble thickener E: 0.01-0.5 parts, preferably 0.1-0.4 parts;
an aqueous surface improvement aid F: 0.5-2 parts, preferably 1-1.5 parts.

6. The aqueous surface treatment liquid according to claim 5, wherein
the aqueous anionic polymer resin A is one or more selected from an aqueous acrylic resin, an aqueous epoxy resin, an aqueous polyester resin and an aqueous alkyd resin; and/or
the tungsten-containing compound B is one or more selected from a tungsten oxide, a tungstate or a tungsten metal salt; and/or
the zinc-containing compound C is selected from a zinc oxide, a zinc salt or an organic zinc compound; and/or
the boron-containing compound D is selected from a boron oxide, a borate or an organic boron compound; and/or
the water-soluble thickener E is one or more selected from a water-soluble hydroxymethyl cellulose, a water-dispersible alkali-swellable polyacrylic acid emulsion, a water-dispersible nonionic polyurethane associative thickening resin; and/or
the aqueous surface improvement aid F is one or two selected from a water-dispersible modified polydimethylsiloxane and a water-dispersible polyether modified silicone; and/or
the aqueous anionic polymer resin A is 20-50 parts by mass; and/or
the tungsten-containing compound B is 15-35 parts by mass, in terms of parts by mass of tungsten element.

7. The aqueous surface treatment liquid according to claim 6, wherein
the aqueous anionic polymer resin A has a number average molecular weight of greater than 8,000, and the mass fraction of harmful substances generated from the combustion of the aqueous anionic polymer resin A is less than 1 wt% of the total solid content of the aqueous anionic polymer resin A; and/or
when the tungsten-containing compound B is a water-insoluble tungsten compound, the tungsten-containing compound B has a particle size of 5-1,000 nm; and/or
when the zinc-containing compound C is a water-insoluble zinc compound, the zinc-containing compound C has a particle size of 5-1,000 nm; and/or
the mass ratio of the zinc element in the zinc-containing compound C to the boron element in the boron-containing compound D is 150:1 to 750:1, preferably 250:1 to 670:1; and/or
the water-soluble thickener E has a number average molecular weight of 50,000-100,000.

8. The aqueous surface treatment liquid according to claim 7, wherein
the tungsten-containing compound B has the particle size of 20-500 nm; and/or
the zinc-containing compound C has the particle size of 20-500 nm.

9. A manufacturing method for the coated steel sheet for hot stamping according to any one of claims 1 to 4, including the following steps: applying the aqueous surface treatment liquid on the surface-cleaned coated steel sheet, then curing the coated aqueous surface treatment liquid at 80-180 °C to form a composite coating layer on the coated steel sheet, thereby obtaining the coated steel sheet for hot stamping.

10. A hot stamping method for the coated steel sheet for hot stamping according to any one of claims 1 to 4, including the steps of punching, heating and stamp forming the coated steel sheet for hot stamping.

11. The hot stamping method according to claim 10, wherein during the heating process, the punched coated steel sheet for hot stamping is heated from 50°C to an ultimate sheet temperature and held for 30-60 s; then the heated coated steel sheet for hot stamping is transferred to a mold having a cooling effect for stamp forming.

12. The hot stamping method according to claim 11, wherein during the heating process, an average heating rate is 3-12 °C/s, and the ultimate sheet temperature is 850-980 °C; and/or
the stamp forming process is carried out in air, with a cooling rate of 27 °C/s or more before the temperature of the coated steel sheet for hot stamping is decreased to 400 °C.

13. A hot stamped and formed coated steel sheet obtained by the hot stamping method according to any one of claims 10 to 12, wherein the hot stamped and formed coated steel sheet has a yield strength of ≥950 MPa, a tensile strength of ≥1300 MPa, an elongation after fracture A₅₀ₘₘ of ≥5%, a hardness HV10 of ≥400 or a hardness HRC of ≥40, and a cold bending angle VDA of ≥45°.
